# EUROPÄISCHE PATENTSCHRIFT

(11) **EP 1 794 907 B1**
(45) Veröffentlichungstag und Bekanntmachung des Hinweises auf die Patenterteilung: **13.01.2010**
(21) Anmeldenummer: 05789883.5
(22) Anmeldetag: 27.09.2005
(51) Int. Cl.: H04B 17/00

(54) **VERFAHREN UND SYSTEM ZUR SENDE- UND EMPFANGSKALIBRIERUNG VON MOBILFUNKGERÄTEN**
METHOD AND SYSTEM FOR CALIBRATING THE TRANSMISSION AND RECEPTION OF MOBILE RADIO DEVICES
PROCEDE ET SYSTEME POUR ETALONNER L'EMISSION ET LA RECEPTION D'APPAREILS RADIOTELEPHONIQUES MOBILES

(30) Priorität: 29.09.2004 DE 102004047309; 16.11.2004 DE 102004055232; 17.01.2005 DE 102005002206; 01.02.2005 DE 102005004631
(43) Veröffentlichungstag der Anmeldung: 13.06.2007
(73) Patentinhaber: Rohde & Schwarz GmbH & Co. KG, 81671 München (DE)
(72) Erfinder: PLAUMANN, Ralf, 85659 Forstern (DE); TIROCH, Dieter, 80333 München (DE)
(74) Vertreter: Körfer, Thomas
(86) Internationale Anmeldenummer: PCT/EP2005/010433
(87) Internationale Veröffentlichungsnummer: WO 2006/034843

(56) Entgegenhaltungen:
- EP-A- 0 420 505
- EP-A- 1 583 265
- US-A- 6 118 811
- US-A1- 2004 127 161

## Beschreibung

Die Erfindung betrifft ein Verfahren und ein System zur Sende- und Empfangskalibrierung von Mobilfunkgeräten.

Ein ganz wichtiger Fertigungsschritt in der Produktion von Mobilfunkgeräten ist die Kalibrierung der Parameter des Mobilfunkgeräts. Für die Kalibrierung ist neben einer hohen Präzision auch eine kurze Prozeßzeit anzustreben. Die Prozeßzeit macht sich dabei insbesondere bei Parametern negativ bemerkbar, bei denen das Mobilfunkgerät in einer Vielzahl von Parameterwerten abgeglichen werden muß. Dies ist beispielsweise bei der Sende- und der Empfangsleistung des Mobilfunkgeräts der Fall, für die mehrere Leistungspegelwerte entlang der Sende- und Empfangskennlinie des Mobilfunkgeräts in jeweils mehreren Frequenzbändern und in jeweils mehreren Übertragungskanälen je Frequenzband kalibriert werden müssen.

Bei am Markt bisher verfügbaren Meßgeräten und -systemen wird für die Kalibrierung jedes Leistungspegelwertes der jeweiligen frequenzabhängigen Empfangs- und/oder Sendekennlinie von einer übergeordneten Ablaufsteuerung ein Testsignal mit einstellbarer Zeitdauer und einstellbarem Referenzpegelwert an das Mobilfunkgerät bzw. an das Meßgerät, mit dem das Mobilfunkgerät getestet wird, übertragen, um anschließend den vom Mobilfunkgerät entsprechend seiner realen Sendekennlinie erzeugten Sendepegelwert bzw. den vom Mobilfunkgerät entsprechend seiner realen Empfangskennlinie erzeugten Empfangspegelwert an den Sendereferenzpegelwert bzw. den Empfangsreferenzpegelwert des Testsignals nachzuführen. Für die Kalibrierung jedes Leistungspegelwertes bei jeder Frequenz kommt folglich neben der eigentlichen Kalibrierungszeit nachteilig noch zusätzlich eine Übertragungszeit für die Übertragung des jeweiligen Referenzpegelwertes des Testsignals hinzu, die die Gesamtzeit zur Kalibrierung aller Leistungspegelwerte in allen Frequenzen deutlich erhöht.

US-6118 811 A offenbart eine Sende-Empfangseinrichtung mit einer eingebauten Selbsttestschaltung. Referenzpegelwerte werden von einem internen Signalprozessor erzeugt.

EP-1 583 265 A1 wurde am 05.10.2005 veröffentlicht und ist ein Stand der Technik gemäss Artikel 54(3) EPÜ. Dieses Dokument zeigt ein System zur Sende- und Empfangskalibrierung eines Mobilfunkgeräts, bei dem durch eine komplette Vorgabe aller Frequenzen und der zu jeder Frequenz gehörigen Referenzpegelwerte an das Mobilfunkgerät von einer Einheit zur übergeordneten Ablaufsteuerung (Tester) vor Beginn aller Messungen alle Messungen der tatsächlich generierten Pegelwerte jeweils unmittelbar aufeinander folgen. Aus dieser Druckschrift ist es nicht bekannt, dass die Sendekalibrierung und Empfangskalibrierung gemeinsam durchgeführt werden.

Der Erfindung liegt deshalb die Aufgabe zugrunde, für die Sende- und Empfangskalibrierung eines Mobilfunkgeräts ein Verfahren und ein System zu schaffen, mit dem die Prozeßzeit zur Kalibrierung der Sende- und Empfangsleistung eines Mobilfunkgeräts gegenüber dem Stand der Technik deutlich reduziert ist.

Die Aufgabe der Erfindung wird durch ein Verfahren zur Sende- und Empfangskalibrierung eines Mobilfunkgeräts mit dem Merkmalen des Anspruchs 1 und durch ein System zur Sende- und Empfangskalibrierung eines Mobilfunkgeräts mit den Merkmalen des Anspruchs 16 gelöst. Vorteilhafte Weiterbildungen der Erfindung sind in den abhängigen Ansprüchen aufgeführt.

Erfindungsgemäß werden in einer ersten Ausführungsform des erfindungsgemäßen Systems zur Sende- und Empfangskalibrierung eines Mobilfunkgeräts vor Durchführung sämtlicher Kalibrierungsvorgänge von einer Einheit zur übergeordneten Ablaufsteuerung die jeweils zu den genutzten Frequenzen im einzelnen jeweils erforderlichen Sende- und Empfangsreferenzpegelwerte des Testsignals in Summe zum Mobilfunkgerät und zum Meßgerät, mit dem das Mobilfunkgerät getestet wird, übertragen. Mithilfe eines von der Einheit zur übergeordneten Ablaufsteuerung erzeugten Synchronisiersignals wird die Kalibrierung anschließend gestartet, bei der zuerst alle vom Mobilfunkgerät tatsächlich gesendeten bzw. empfangenen Pegelwerte des Testsignals gemessen werden und anschließend die Nachführung der vom Mobilfunfgerät tatsächlich gesendeten bzw. empfangenen Pegelwerte des Testsignals an die jeweils korrespondierenden Sende- bzw. Empfangsreferenzpegelwerte des Testsignals - ohne Zwischenschaltung eines Übertragungsvorgangs für die Referenzpegelwerte des Testsignals durchgeführt werden.

Während bei einem Kalibrierungssystem nach dem Stand der Technik für die Kalibrierung von 4 Frequenzbändern, 10 Übertragungskanälen je Frequenzband und 5 Leistungspegelwerten je Übertragungskanal eine durchschnittliche Kalibrierungszeit von 30 bis 80 Sekunden anzunehmen ist, ergibt sich beim erfindungsgemäßen Verfahren und System zur Sende- und Empfangskalibrierung von Mobilfunkgeräten eine Reduzierung der Kalibrierungszeit auf weniger als 1 Sekunde.

Die im allgemeinen gemeinsam durchzuführende Kalibrierung der Sende- und Empfangsleistung des Mobilfunkgeräts ist erfindungsgemäß derart organisiert, daß die Kalibrierung jedes einzelnen Sendepegelwertes simultan zur Kalibrierung jedes einzelnen Empfangspegelwertes durchgeführt wird.

Im Falle einer Kalibrierung der Empfangspegelwerte ist erfindungsgemäß eine parallele Kalibrierung mehrerer Mobilfunkgeräte möglich. Parallel zur Kalibrierung der Empfangspegelwerte kann erfindungsgemäß die Frequenzkalibrierung des Frequenzoszillators des Mobilfunkgeräts erfolgen.

Die Messung der einzelnen Sende- und Empfangspegelwerte im Rahmen eines Kalibriervorgangs erfolgt jeweils in einem Zeitschlitz - slot -, der eine gewisse Zeitdauer besitzt. Hierbei können die Zeitschlitze der zu einer bestimmten Betriebsfrequenz des Testsignals gehörigen einzelnen Pegelwerte des Testsignals innerhalb eines bestimmten Zeitrahmens - frame - direkt zeitlich aufeinanderfolgen oder durch einzelne Zeitschlitze, in denen keine Messung durchgeführt wird, getrennt voneinander angeordnet sein. Beim Übergang zwischen zwei Betriebsfrequenzen wird der Meßvorgang erfindungsgemäß durch Einfügen eines Zeitschlitzes, in dem keine Kalibrierung stattfindet, unterbrochen.

In einer zweiten Ausführungsform des erfindungsgemäßen Systems zur Sende- und Empfangskalibrierung eines Mobilfunkgeräts wird auf die Einheit zur übergeordneten Ablaufsteuerung verzichtet, indem das Meßgerät sämtliche vom Anwender bzw. Mobilfunk-Standard vorgegebenen Frequenzen und dazugehörigen frequenzabhängigen Sende- und Empfangsreferenzpegelwerte an das Mobilfunkgerät überträgt.

Die dritte Ausführungsform des erfindungsgemäßen Systems zur Sende- und Empfangskalibrierung eines Mobilfunkgeräts beinhaltet nur noch eine einzige Verbindungsleitung, über die die bidirektionale Übertragung zwischen Meßgerät und Mobilfunkgerät erfolgt.

Die Ausführungsformen des erfindungsgemäßen Verfahrens zur Sende- und Empfangskalibrierung eines Mobilfunkgeräts und des erfindungsgemäßen Systems zur Sende- und Empfangskalibrierung eines Mobilfunkgerätes werden im folgenden unter Bezugnahme auf die Zeichnung näher erläutert. In der Zeichnung zeigen:
- Fig. 1: ein Blockschaltbild einer ersten Auführungsform eines erfindungsgemäßen Systems zur Sende- und Empfangskalibrierung eines einzigen Mobilfunkgeräts,
- Fig. 2: ein Flußdiagramm des Verfahrens zur Sendekalibrierung eines Mobilfunkgeräts,
- Fig. 3: ein Zeitdiagramm des Verfahrens zur Sendekalibrierung eines Mobilfunkgeräts,
- Fig. 4: ein Zeitdiagramm mehrerer in einem Zeitrahmen direkt aufeinanderfolgender Zeitschlitze,
- Fig. 5: ein Zeitdiagramm mehrerer in einem Zeitrahmen beabstandeter Zeitschlitze,
- Fig. 6: ein Flußdiagramm des Verfahrens zur Empfangskalibrierung eines Mobilfunkgeräts,
- Fig. 7: ein Zeitdiagramm des Verfahrens zur Empfangskalibrierung eines Mobilfunkgeräts,
- Fig. 8: ein Flußdiagramm des Verfahrens zur sequenziellen Sende- und Empfangskalibrierung eines Mobilfunkgeräts,
- Fig. 9: ein Flußdiagramm des erfindungsgemäßen Verfahrens zur simultanen Sende- und Empfangskalibrierung eines Mobilfunkgeräts,
- Fig. 10: ein Blockschaltbild einer zweiten Ausführungsform eines erfindungsgemäßen Systems zur Sende- und Empfangskalibrierung eines Mobilfunkgeräts,
- Fig. 11: ein Blockschaltbild einer dritten Ausführungsform eines erfindungsgemäßen Systems zur Sende- und Empfangskalibrierung eines Mobilfunkgeräts,
- Fig. 12: ein Blockschaltbild einer ersten Ausführungsform eines erfindungsgemäßen Systems zur parallelen Sende- und Empfangskalibrierung mehrerer Mobilfunkgeräte und
- Fig. 13: ein Blockschaltbild einer zweiten Ausführungsform eines erfindungsgemäßen Systems zur parallelen Empfangskalibrierung mehrerer Mobilfunkgeräte.

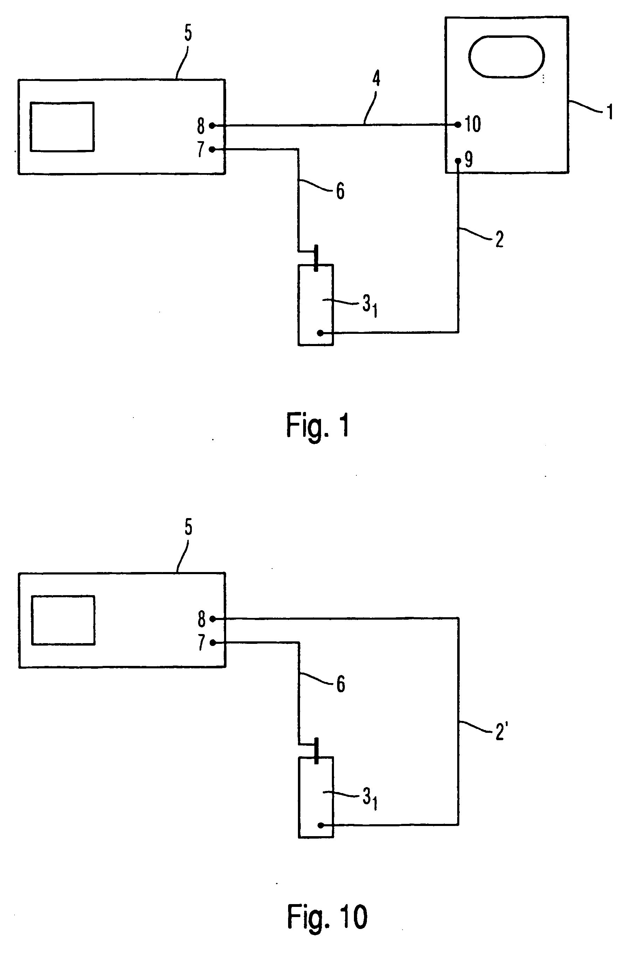

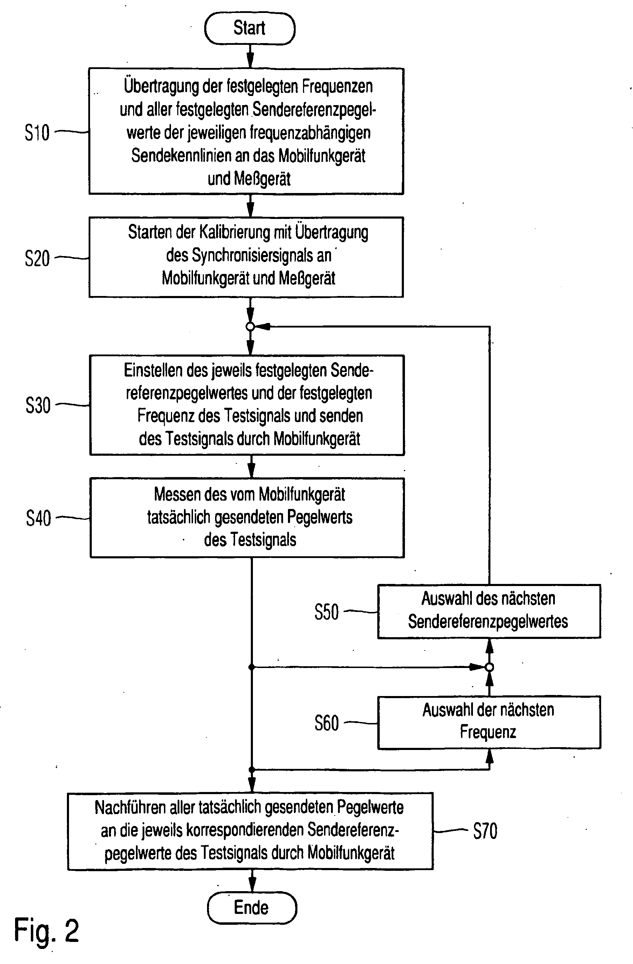

Ausgehend von Fig. 1, in dem das Blockschaltbild einer ersten Ausführungsform des erfindungsgemäßen Systems zur Sende- und Empfangskalibrierung eines einzigen Mobilfunkgerätes dargestellt ist, wird im folgenden ein Verfahren zur Sendekalibrierung eines Mobilfunkgerätes gemäß Fig. 2 beschrieben:

Im Verfahrensschritt S10 des Verfahrens zur Sendekalibrierung eines Mobilfunkgerätes gemäß Fig. 2 werden die zu den festgelegten Übertragungskanälen in den einzelnen Frequenzbändern gehörigen Betriebsfrequenzen und die zu jeder Betriebsfrequenz jeweils gehörigen Sendereferenzpegelwerte der idealen betriebsfrequenzabhängigen Sendekennlinie des Mobilfungeräts 3₁ von der Einheit zur übergeordneten Ablaufsteuerung 1 über die Schnittstelle 9 und die Verbindungsleitung 2 zum Mobilfunkgerät 3₁ bzw. über die Schnittstelle 10 und die Verbindungsleitung 4 zum Meßgerät 5 übertragen.

Im darauffolgenden Verfahrensschritt S20 wird mit der Übertragung des Synchronisiersignals von der Einheit zur übergeordneten Ablaufsteuerung 1 an das Mobilfunkgerät 3₁ und an das Meßgerät 5 die Kalibrierung gestartet. Auf diese Weise ist das Mobilfunkgerät 3₁ mit dem Meßgerät 5 sowie mit der Einheit zur übergeordneten Ablaufsteuerung 1 erfindungsgemäß selbstsynchronisiert. Eine zusätzliche Vorrichtung - beispielsweise eine zusätzliche Trigger- bzw. Synchronisier-Einheit - zur kontinuierlichen Synchronisierung des Meßgeräts 5 mit dem Mobilfunkgerät 3₁ ist in diesem Fall nicht erforderlich.

Im Verfahrensschritt S30 erfolgt am Mobilfunkgerät 3₁ die Einstellung der ersten Betriebsfrequenz und des zur ersten Betriebsfrequenz gehörigen ersten Sendereferenzpegelwertes des Testsignals. Nach Einstellung des Referenzwerts des Testsignals - festgelegter Betriebsfrequenz und festgelegter Sendereferenzpegelwert - wird der ausgehend vom Sendereferenzpegelwert des Testsignals über die Sendekennlinie des Ausgangsverstärkers des Mobilfunkgerätes 3₁ tatsächlich erzeugte Pegelwert vom Mobilfunkgerät 3₁ gesendet.

Der vom Mobilfunkgerät 3₁ im erfindungsgemäßen System über die Verbindungsleitung 6 an das Meßgerät 5 gesendete Pegelwert wird im darauffolgenden Verfahrensschritt S40 vom Meßgerät 5 erfaßt.

Ist dieser Meßvorgang in Verfahrensschritt S40 erfolgreich abgeschlossen, so wird, falls noch ein weiterer Sendereferenzpegelwert in der jeweiligen Betriebsfrequenz zu messen und zu kalibrieren ist, der weitere Sendereferenzpegelwert vom Mobilfunkgerät 3₁ im Rahmen des Verfahrensschrittes S50 ausgewählt und der nächste Meßvorgang mit Verfahrensschritt S30 fortgesetzt.

Sind alle Sendepegelwerte der gesamten Sendekennlinie zur jeweils festgelegten Betriebsfrequenz gemessen und sind noch nicht alle betriebsfrequenzabhängigen Sendekennlinien des Mobilfunkgerätes 3₁ gemessen worden, so wird die jeweils folgende Betriebsfrequenz im Verfahrensschritt S60 vom Mobilfunkgerät 3₁ ausgewählt und der nächste Sendereferenzpegelwert, der der erste zu kalibrierende Sendereferenzpegelwert der zur soeben eingestellten Betriebsfrequenz gehörigen Sendekennlinie des Mobilfunkgerätes 3₁ ist, in Verfahrensschritt S50 ausgewählt und der nächste Meßvorgang mit Verfahrensschritt S30 fortgesetzt.

Die Verfahrensschritte S30, S40, S50 und S60 werden im folgenden sooft iterativ durchlaufen, bis alle tatsächlich gesendeten Pegelwerte der betriebsfrequenzabhängigen Sendekennlinien aller zu kalibrierender Übertragungskanäle gemessen sind.

Im abschließenden Verfahrensschritt S70 werden alle vom Mobilfunkgerät 3₁ tatsächlich gesendeten und vom Meßgerät 5 gemessenen Sendepegelwerte über die Verbindungsleitung 4, die Einheit zur übergeordneten Ablaufsteuerung 1 und die Verbindungsleitung 2 an das Mobilfunkgerät 3₁ übertragen. Diese tatsächlich gesendeten Pegelwerte werden vom Mobilfunkgerät 3₁ durch Überlagerung eines Kompensationssignals an die jeweils korrespondierenden Sendereferenzpegelwerte nachgeführt.

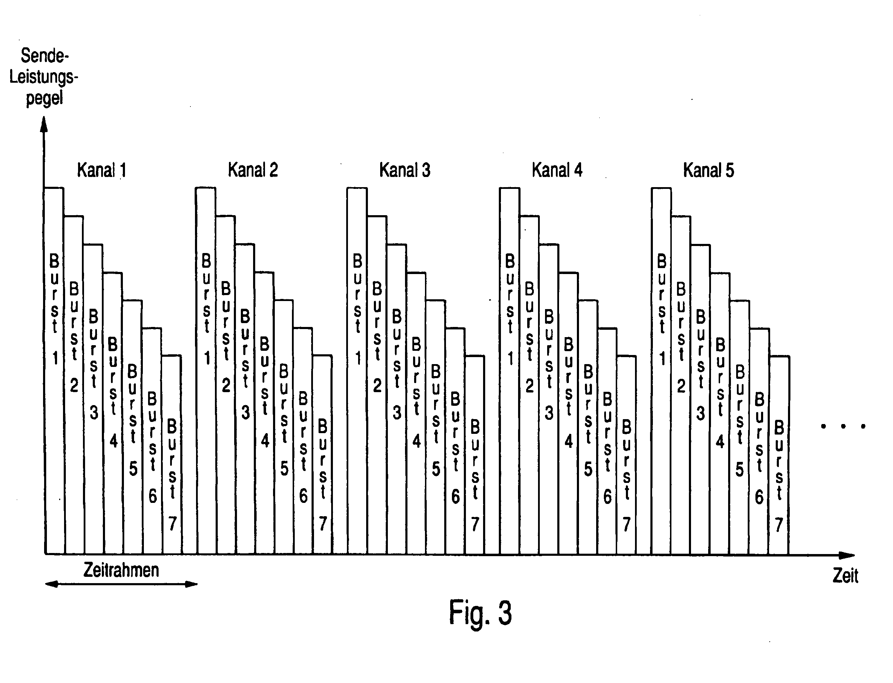

In Fig. 3 ist das Zeitdiagramm für die Kalibrierung der Sendekennlinie des Mobilfunkgerätes 3₁ dargestellt. Zu erkennen sind die die betriebsfrequenzabhängige Sendekennlinie darstellenden Sendereferenzpegelwerte des Testsignals für die einzelnen Übertragungskanäle 1,2,3,4,5 usw.. Für die Kalibrierung jedes Sendereferenzpegelwertes des Testsignals ist jeweils ein Zeitschlitz - slot - vorgesehen, in dem der Meßvorgang des tatsächlich gesendeten Pegelwertes durchgeführt wird .

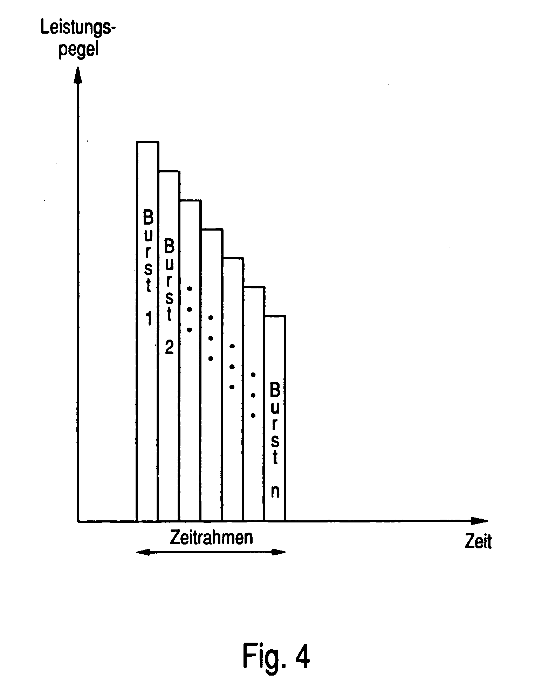

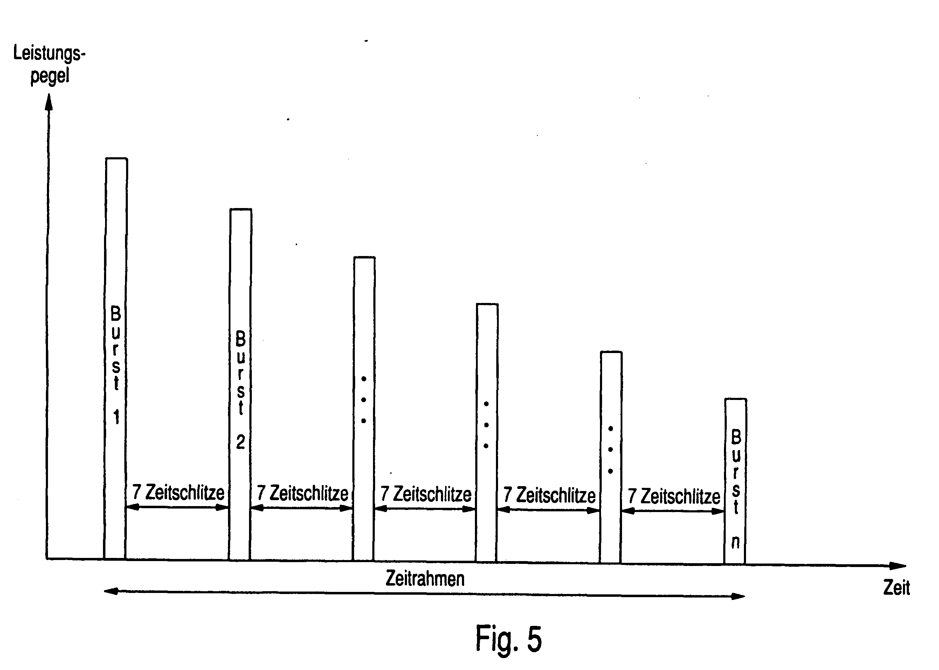

Die Gesamtanzahl an Meßvorgängen je Übertragungskanal - in Fig. 3 beispielsweise insgesamt 7 Pegel-Meßvorgänge - erfolgt in einem Zeitrahmen (frame). Hierbei können die einzelnen Zeitschlitze, wie in Fig. 3 und 4 dargestellt, unmittelbar aufeinanderfolgend oder, wie in Fig. 5 dargestellt, über eine bestimmte Anzahl von Zeitschlitzen, in denen jeweils kein Meßvorgang stattfindet, voneinander getrennt angeordnet sein. Die Anzahl der Zeitschlitze in Fig. 5, in denen bewußt keine Meßvorgänge durchgeführt werden, beträgt beispielsweise sieben, während bei unmittelbar aufeinanderfolgenden Zeitschlitzen in Fig. 3 bzw. 4 im Anschluß an den Zeitschlitz, in dem der letzte aller Meßvorgänge des jeweiligen Übertragungskanals stattfindet, ein Zeitschlitz vorgesehen ist, in dem die Frequenzumschaltung auf den nächsten Übertragungskanals erfolgt und deshalb kein Meßvorgang durchgeführt wird.

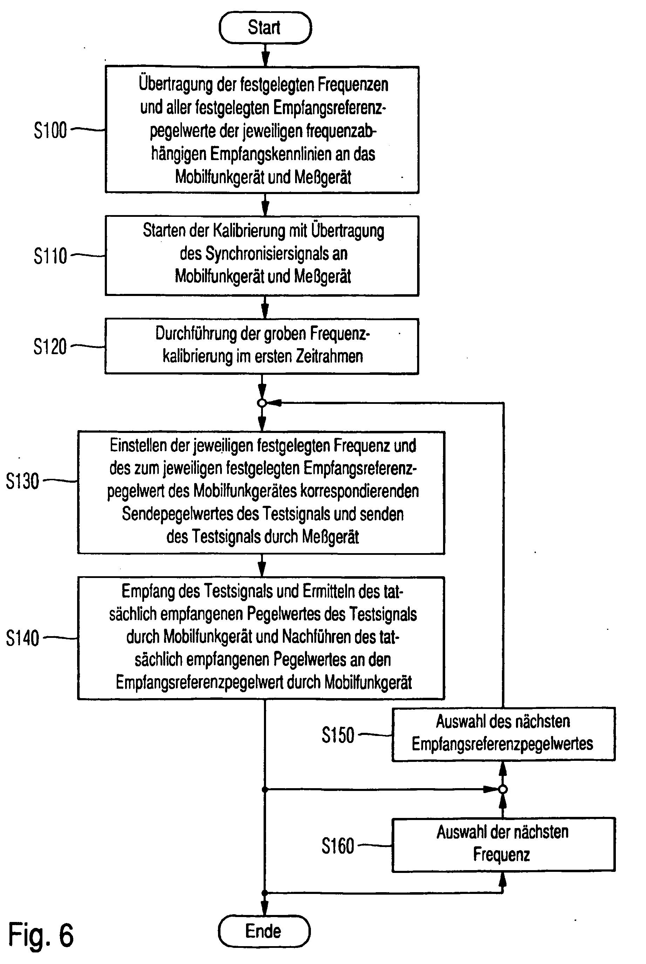

In Fig. 6 ist das Flußdiagramm eines Verfahrens zur Empfangskalibrierung eines Mobilfunkgerätes dargestellt.

Im ersten Verfahrensschritt S100 werden in Analogie zum Verfahrensschritt S10 des erfindungsgemäßen Verfahrens zur Sendekalibrierung eines Mobilfunkgerätes gemäß Fig. 2 von der Einheit zur übergeordneten Ablaufsteuerung 1 die zu den vorher festgelegten Übertragungskanälen in den einzelnen Frequenzbändern jeweils gehörigen Betriebsfrequenzen sowie die zu den jeweils festgelegten Betriebsfrequenzen gehörigen Empfangsreferenzpegelwerte der betriebsfrequenzabhängigen Empfangskennlinie des Eingangsverstärkers des Mobilfunkgerätes 3₁ über die Verbindungsleitung 2 zum Mobilfunkgerät 3₁ und über die Verbindungsleitung 4 zum Meßgerät 5 übertragen.

Im darauffolgenden Verfahrensschritt S110 erfolgt ebenfalls in Analogie zum Verfahrensschritt S20 beim erfindungsgemäßen Verfahren zur Sendekalibrierung eines Mobilfunkgerätes gemäß Fig. 2 der Start der Kalibrierung mit Übertragung des Synchronisiersignals von der Einheit zur übergeordneten Ablaufsteuerung 1 zum Mobilfunkgerät 3₁ und zum Meßgerät 5. Auf diese Weise ist das Mobilfunk gerät 3₁ mit dem Meßgerät 5 sowie mit der Einheit zur übergeordneten Ablaufsteuerung 1 selbstsynchronisiert.

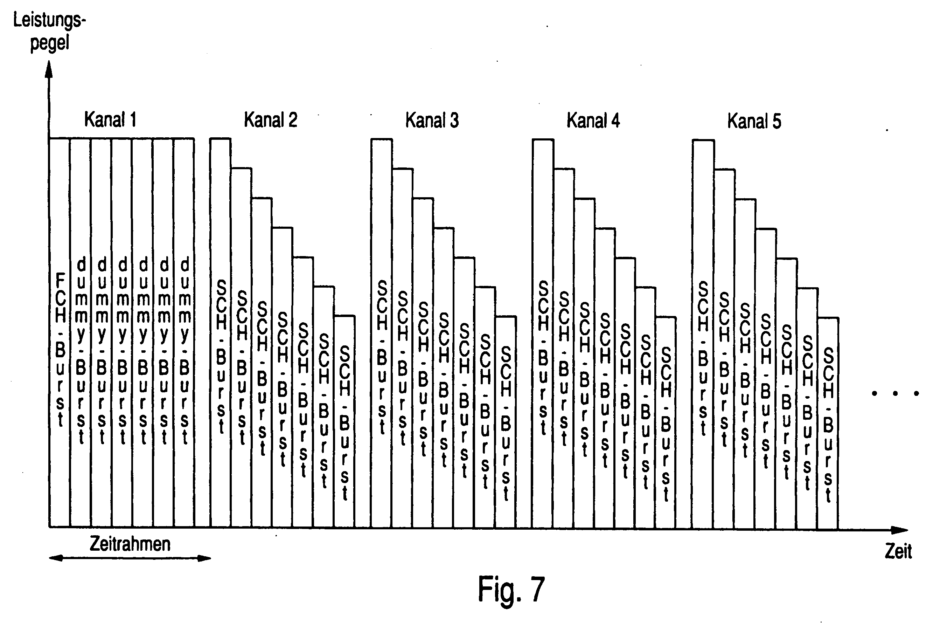

Im nächsten Verfahrensschritt S120 erfolgt während des ersten Zeitrahmens eine grobe Frequenzkalibrierung des Frequenzoszillators des Mobilfunkgerätes 3₁. Die grobe Frequenzkalibrierung wird gemäß Fig. 7 mit einem Frequenzsynchronisiersignal - beispielsweise ein FCH-Burst im Fall des GSM-Standards - gestartet und erstreckt sich über mehrere Zeitschlitze - im Zeitrahmen der Fig. 7 beispielsweise über 6 Zeitschlitze -, in denen vom Meßgerät 5 sogenannte Dummy-Testsignale - Testsignale ohne Nutz- oder Steuerinformationen - zum Mobilfunkgerät 3₁ übertragen werden. Die grobe Frequenzkalibrierung, die im Detail nicht Gegenstand der Erfindung ist und deshalb nicht näher ausgeführt wird, ist am Ende des ersten Zeitrahmens erfolgreich abgeschlossen.

Im darauffolgenden Verfahrensschritt S130 wird vom Meßgerät 5 die jeweilige vorher festgelegte Betriebsfrequenz und der jeweilige zum vorher festgelegten Empfangsreferenzpegelwert korrespondierende Sendepegel des Testsignals eingestellt und das somit vom Meßgerät 5 erzeugte Testsignal dem Mobilfunkgerät 3₁ über die Verbindungsleitung 6 zugesendet.

Das vom Meßgerät 5 gesendete Testsignal wird im nächsten Verfahrensschritt S140 vom Mobilfunkgerät 3₁ empfangen und über die Empfangskennlinie des Eingangsverstärkers wird der tatsächlich empfangene Pegelwert des Testsignals ermittelt, der im unkalibrierten Zustand vom zugehörigen Empfangsreferenzpegelwert abweichen kann. Über beispielsweise ein Kompensationssignal wird der tatsächlich vom Mobilfunkgerät 3₁ empfangene Pegelwert des Testsignals an den Empfangsreferenzpegelwert in Verfahrensschritt S140 nachgeführt.

Nach erfolgreichem Abschluß des Meßvorgangs des tatsächlich gesendeten Pegelwertes wird, falls innerhalb der festgelegten Betriebsfrequenz des jeweiligen Übertragungskanals noch ein weiterer Pegelwert der Empfangskennlinie kalibriert werden muß, der nächste Empfangsreferenzpegelwert in der jeweiligen betriebsfrequenzabhängigen Empfangskennlinie des Mobilfunkgerätes 3₁ im nächsten Verfahrensschritt S150 ausgewählt und der nächste Meßvorgang im Verfahrensschritt S120 angestoßen.

Sind alle Pegelwerte der Empfangskennlinie bei einer Betriebsfrequenz des jeweils festgelegten Übertragungskanals gemessen, so wird, falls noch nicht alle betriebsfrequenzabhängigen Empfangskennlinien des Mobilfunkgerätes 3₁ gemessen sind, die jeweils folgende Betriebsfrequenz des nächsten Übertragungskanals im Verfahrensschritt S160 ausgewählt und der nächste Empfangsreferenzpegelwert, der dem ersten Empfängsreferenzpegelwert der zur soeben ausgewählten Betriebsfrequenz gehörigen Empfangskennlinie des Mobilfunkgerätes 3₁ entspricht, in Verfahrensschritt S150 ausgewählt.

Die Verfahrensschritte S130, S140, S150 und S160 werden im folgenden sooft iterativ durchlaufen, bis alle tatsächlich empfangenen Pegelwerte gemessen sind.

Optional kann in den Verfahrensschritten S130 und S140 in jedem der Zeitschlitze mittels beispielsweise eines SCH-Bursts im Fall des GSM-Standards eine präzise Frequenzkalibrierung des Frequenzoszillators des Mobilfunkgeräts 3₁ durchgeführt werden.

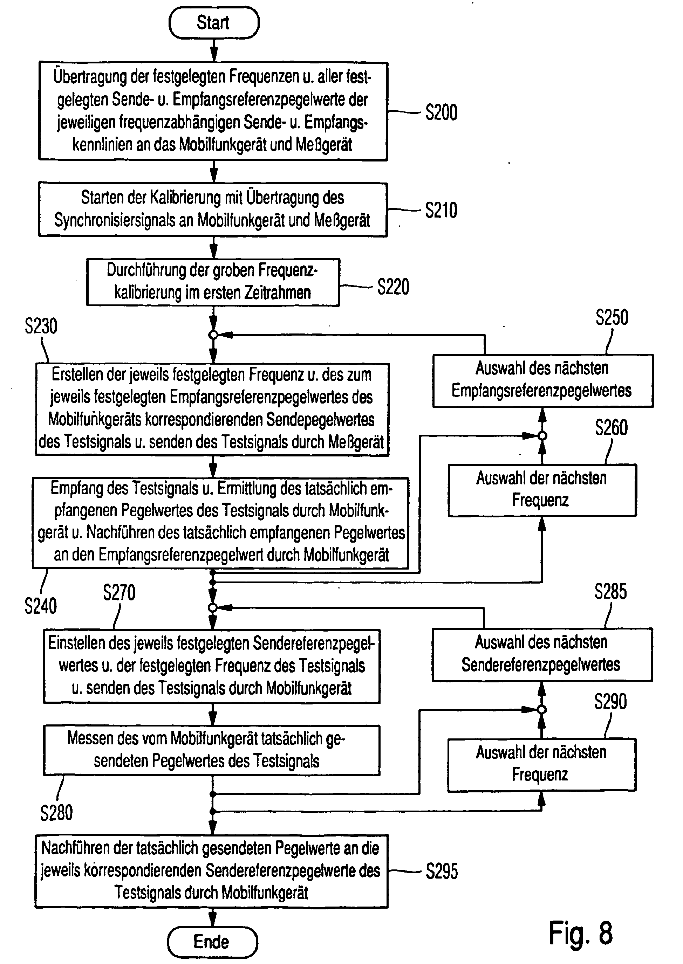

In Fig. 8 ist das Flußdiagramm eines Verfahrens zur sequenziellen Sende- und Empfangskalibrierung eines Mobilfunkgerätes dargestellt.

In Verfahrensschritt S200 werden Betriebsfrequenzen aller vorher festgelegten Übertragungskanäle und die für jede betriebsfrequenzabhängige Sende- und Empfangskennlinie des Mobilfunkgerätes jeweils festgelegten Sende- und Empfangsreferenzpegelwerte von der Einheit zur übergeordneten Ablaufsteuerung 1 an das Mobilfunkgerät 3₁ über die Verbindungsleitung 2 und an das Meßgerät 5 über die Verbindungsleitung 4 übertragen.

Im darauf folgenden Verfahrensschritt S210 erfolgt in Analogie zum Verfahrensschritt S20 bzw. S110 im erfindungsgemäßen Verfahren zur Sende- bzw. Empfangskalibrierung eines Mobilfunkgerätes der Start der Kalibrierung durch Übertragung eines Synchronisiersignals von der Einheit zur übergeordneten Ablaufsteuerung 1 an das Mobilfunkgerät 3₁ und an das Meßgerät 5. Auf diese Weise sind Mobilfunkgerät 3₁ und Meßgerät 5 über die Einheit zur übergeordneten Ablaufsteuerung 1 zueinander selbstsynchronisiert.

In den folgenden Verfahrensschritten S220, S230, S240, S250 und S260 erfolgt in Analogie zu den Verfahrensschritten S120, S130, S140, S150 und S160 des erfindungsgemäßen Verfahrens zur Empfangskalibrierung eines Mobilfunkgerätes die grobe und/oder präzise Frequenzkalibrierung des Frequenzoszillators des Mobilfunkgerätes 3₁ sowie die Kalibrierung aller Empfangspegelwerte, die jeweils für jede betriebsfrequenzabhängige Empfangskennlinie des Mobilfunkgerätes 3₁ festgelegt werden.

In den folgenden Verfahrensschritten S270, S280, S285, S290 und S295 erfolgt in Analogie zu den Verfahrensschritten S30, S40, S50, S60 und S70 des erfindungsgemäßen Verfahrens zur Sendekalibrierung eines Mobilfunkgerätes die Kalibrierung aller Sendepegelwerte, die jeweils für die betriebsfrequenzabhängige Sendekennlinie des Mobilfunkgerätes 3₁ festgelegt werden.

Die Verfahrensschritte S230, S240, S250, 5260 für die Kalibrierung der Empfangskennlinie des Mobilfunkgeräts 3₁ sowie die VerfahrensschritteS270, S280, S285 und S290 für die Kalibrierung der Sendekennlinie des Mobilfunkgeräts 3₁ werden im folgenden sooft iterativ durchlaufen, bis alle tatsächlich empfangenen und gesendeten Pegelwerte gemessen sind.

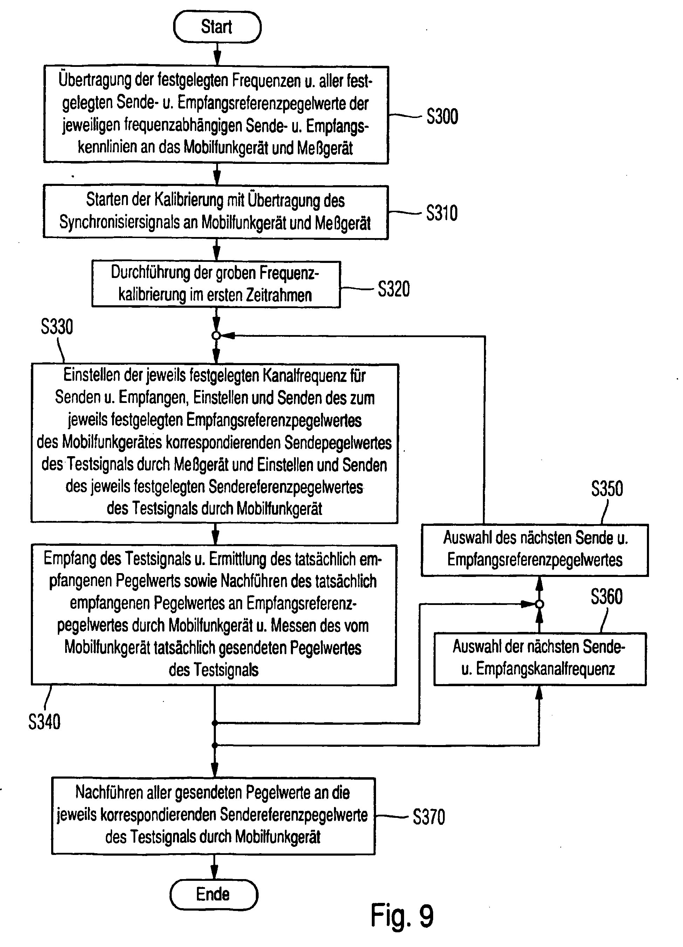

In Fig. 9 ist das Flußdiagramm des erfindungsgemäßen Verfahrens zu simultanen Sende- und Empfangskalibrierung eines Mobilfunkgerätes dargestellt.

Die Verfahrensschritte S300 zur Übertragung der festgelegten Frequenzen und der zu den jeweils festgelegten Frequenzen gehörigen Sende- und Empfangsreferenzpegelwerte der zugehörigen betriebsfrequenzabhängigen Sende- und Empfangskennlinien des Mobilfunkgerätes 3₁, S310 zum Starten des Kalibrierungsvorgangs mit Hilfe des Synchronisiersignals und S320 zur groben Frequenzkalibrierung des Frequenzoszillators entsprechen den Verfahrensschritten S200, S210 und S220 des erfindungsgemäßen Verfahrens zur sequenziellen Sende- und Empfangskalibrierung eines Mobilfunkgerätes in Fig. 8.

Im Verfahrensschrit S330 erfolgt die Einstellung der jeweils festgelegten Empfangskanalfrequenz und des zum jeweils festgelegten Empfangsreferenzpegelwert des Mobilfunkgeräts 3₁ korrespondierenden Sendepegelwerts des Testsignals sowie das Senden des derart eingestellten Testsignals durch Meßgerät 5 entsprechend dem Verfahrensschrit S130 des erfindungsgemäßen Verfahrens zur Empfangskalibrierung eines Mobilfunkgeräts gemäß Fig. 6 und parallel die Einstellung der jeweils festgelegten Sendekanalfrequenz und des jeweils festgelegten Sendereferenzpegelwerts sowie das Senden des derart eingestellten Testsignals durch Mobilfunkgerät 3₁ entsprechend dem Verfahrensschritt S30 des erfindungsgemäßen Verfahrens zur Sendekalibrierung eines Mobilfunkgerätes gemäß Fig. 2.

Im Verfahrensschritt S340 erfolgt der Empfang des Testsignals, die Ermittlung des tatsächlich empfangenen Pegelwerts und das Nachführen des tatsächlich empfangenen Pegelwerts am jeweiligen Empfangsreferenzpegelwert durch das Mobilfunkgerät 3₁ entsprechend dem Verfahrensschritt S140 des erfindungsgemäßen Verfahrens zur Empfangskalibrierung eines Mobilfunkgeräts gemäß Fig. 6 und parallel die Messung des vom Mobilfunkgerät 3₁ tatsächlich gesendeten Pegelwerts durch Meßgerät 5 entsprechend dem Verfahrensschritt S40 des erfindungsgemäßen Verfahrens zur Sendekalibrierung eines Mobilfunkgeräts gemäß Fig. 2.

Nachdem die Messung jeweils eines Sende- und Empfangspegelwertes der Sende- bzw. Empfangskennlinie des Mobilfunkgerätes 3₁ erfolgreich durchgeführt wurde, wird, falls noch ein weiterer Sendepegelwert der zur ausgewählten Sendekanalfrequenz gehörigen Sendekennlinie und noch ein weiterer Empfangspegelwert der zur ausgewählten Empfangskanalfrequenz gehörigen Empfangskennlinie des Mobilfunkgerätes 3₁ zu messen bzw. zu kalibrieren ist, der für den nächsten Meß- bzw. Kalibriervorgang erforderliche Sende- und Empfangsreferenzpegelwert in Verfahrensschritt S350 ausgewählt und die Messung bzw. Kalibrierung mit Verfahrensschritt S330 fortgesetzt.

Sind alle Sendepegelwerte einer betriebsfrequenzabhängigen Sendekennlinie gemessen bzw. alle Empfangspegelwerte einer betriebsfrequenzabhängigen Empfangskennlinie kalibriert und gleichzeitig noch nicht alle betriebsfrequenzabhängigen Sendekennlinien und noch nicht alle betriebsfrequenzabhängigen Empfangskennlinien des Mobilfunkgerätes 3₁ abgeglichen, so wird in Verfahrensschritt S360 die Frequenz des nächsten Sende- und Empfangskanals ausgewählt und in Verfahrensschritt S350 die nächsten Sende- und Empfangsreferenzpegelwerte, die den jeweils ersten Sende- und Empfangsreferenzpegelwerten der im folgenden zu kalibrierenden Sende- und Empfangskennlinie entsprechen, ausgewählt.

Die Verfahrensschritte S330, S340, S350, und S360 werden im folgenden sooft iterativ durchlaufen, bis alle tatsächlich empfangenen Pegelwerte an die zugehörigen Empfangsreferenzpegelwerte der betriebsfrequenzabhängigen Empfangskennlinien aller zu kalibrierender Übertragungskanäle nachgeführt und alle gesendeten Pegelwerte der zugehörigen Sendekennlinie gemessen sind.

Schließlich werden im abschließenden Verfahrensschritt S370 alle vom Mobilfunkgerät 3₁ tatsächlich gesendeten Pegelwerte vom Meßgerät 5 über die Verbindungsleitung 4, die übergeordnete Einheit zur Ablaufsteuerung 1 und die Verbindungsleitung 2 dem Mobilfunkgerät 3₁ zugeführt, in dem dann die tatsächlich gesendeten Pegelwerte an die jeweils korrespondierenden Sendereferenzpegelwerte nachgeführt werden.

In Fig. 10 ist eine zweite Ausführungsform eines erfindungsgemäßen Systems zur Sende- und Empfangskalibrierung eines Mobilfunkgeräts dargestellt. Im Gegesatz zur ersten Ausführungsform wird in der zweiten Ausführungsform auf die Einheit zur übergeordneten Ablausteuerung 1 verzichtet und das Meßgerät 5 ist direkt über die Verbindungsleitung 2' mit dem Mobilfunkgerät verbunden. Die vom jeweiligen Mobilfunkstandard bzw. vom Anwender festgelegten Betriebsfrequenzen sowie die zur betriebsfrequenzabhängigen Sende- bzw. Empfangskennlinie gehörigen Sende- und Empfangsreferenzpegelwerte sind entweder im Meßgerät 5 oder Mobilfunkgerät 3₁ vorab abgespeichert und werden in den jeweiligen Verfahrensschritten S10 in Fig. 2, S100 in Fig. 6, S200 in Fig. 8 und S300 in Fig. 9 der Verfahren zur Sende und/oder Empfangskalibrierung eines Mobilfunkgeräts an das jeweils andere Gerät - Mobilfunkgerät 3₁ oder Meßgerät 5 - übertragen. Auch die Selbstsynchronisierung in den jeweiligen Verfahrensschritten S20 in Fig. 2, S110 in Fig. 6, S210 in Fig. 8 und S310 in Fig. 9 der Verfahren zur Sende und/oder Empfangskalibrierung eines Mobilfunkgeräts erfolgt jeweils zwischen dem Meßgerät 5 und dem Mobilfunkgerät 3₁ ohne Beteiligung einer weiteren Vorrichtung.

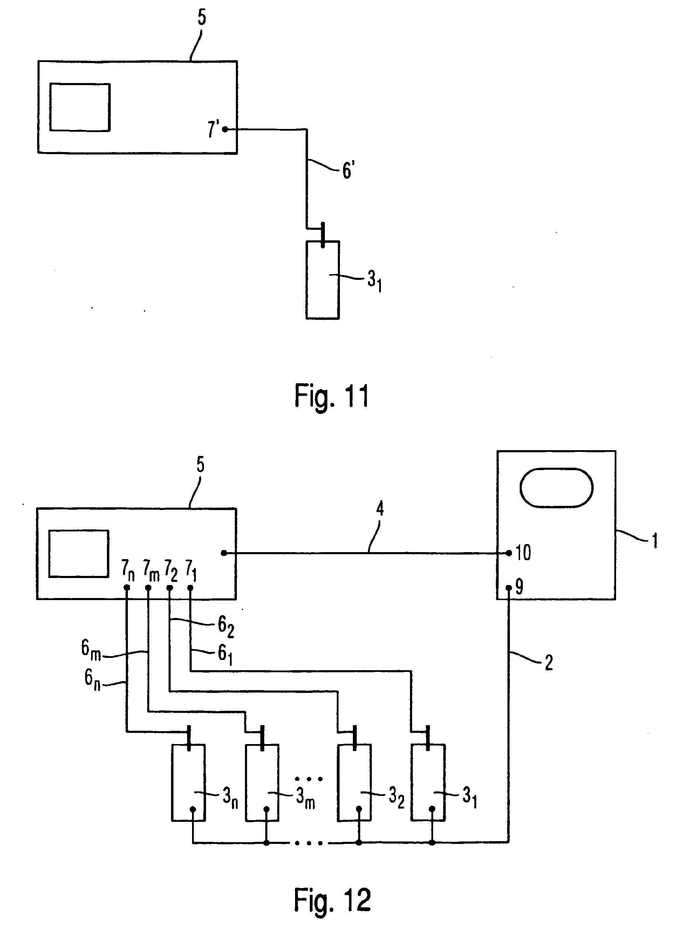

In der dritten Ausführungsform des erfindungsgemäßen Systems zur Sende- und Empfangskalibrierung eines Mobilfunkgeräts in Fig. 11 erfolgt in Abgrenzung zur ersten und zweiten Ausführungsform die Übertragung zwischen Meßgerät 5 und Mobilfunkgerät 3₁ in beiden Richtungen - Sende- und Empfangsbetrieb des Mobilfunkgeräts 3₁ - über eine einzige Schnittstelle 7'und eine einzige Verbindung 6'.

In Fig. 12 ist das Blockschaltbild eines erfindungsgemäßen Systems zur parallelen Sende- und Empfangskalibrierung mehrerer Mobilfunkgeräte 3₁, 3₂, ... , 3ₘ, 3ₙ dargestellt.

Da das Meßgerät 5 insgesamt n Meß-Einheiten und n Schnittstellen 7₁,7₂,...,7ₘ und 7ₙ aufweist, die über jeweils eine Verbindungsleitung 6₁,6₂,...,6ₘ und 6ₙ jeweils mit einem der insgesamt n Mobilfunkgeräte 3₁,3₂,...,3ₘ und 3ₙ verbunden sind, ist eine parallele Sende- und Empfangskalibrierung jedes der insgesamt n Mobilfunkgeräte 3₁,3₂,...,3ₘ und 3ₙ möglich.

Den einzelnen Meß-Einheiten des Meßgerätes 5 und den einzelnen Mobilfunkgeräten 3₁,3₂,...,3ₘ und 3ₙ werden von der übergeordneten Einheit zur Ablaufsteuerung 1 über jeweils die Verbindungsleitung 4 und 2 die einzelnen Sende- und Empfangskanalfrequenzen und die Sende- und Empfangsreferenzpegelwerte der zur jeweiligen Sende- und Empfangskanalfrequenz gehörigen Sende- und Empfangskennlinie i.S. der Verfahrensschritte S10, S100, S200 und S300 der Verfahren zur Sende- und/oder Empfangskalibrierung in Fig. 2,6,8 und 9 übertragen.

Nach dem Starten der Kalibriervorgänge mittels Synchronisiersignal gemäß der Verfahrensschritte S20, S110, S210 und S310 der erfindungsgemäßen Verfahren zur Sende- und/oder Empfangskalibrierung in Fig. 2, 6, 8 und 9 und optionaler Durchführung der Frequenzkalibrierung gemäß der Verfahrensschritte S120, S220 und S320 der Verfahren zur Sende- und/oder Empfangskalibrierung in Fig. 6, 8 und 9 können die einzelnen betriebsfrequenzabhängigen Sende- und/oder Empfangskennlinien der einzelnen Mobilfunkgeräte 3₁,3₂,...,3ₘ und 3ₙ i.S. der in den Fig. 2, 6, 8, 9 dargestellten Verfahren zur Sende- und/oder Empfangskalibrierung parallel kalibriert werden.

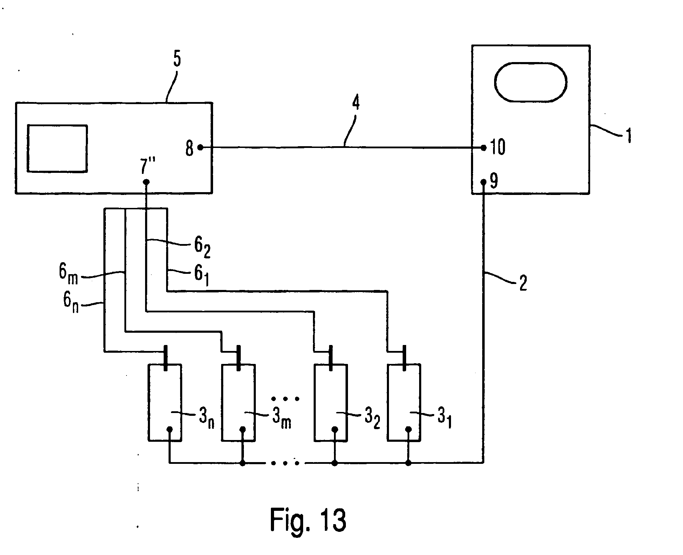

In Fig. 13 ist schließlich das Blockschaltbild einer Ausführungsform des erfindungsgemäßen Systems zur parallelen Empfangskalibrierung mehrerer Mobilfunkgeräte dargestellt, das in Abgrenzung zur ersten Ausführungsform nur eine einzige Schnittstelle 7" aufweist, an die alle Verbindungsleitungen 6₁,6₂,...,6ₘ,6ₙ geführt sind. Gegenüber der Ausführungsform des erfindungsgemäßen Systems zur parallelen Sende- und Empfangskalibrierung mehrerer Mobilfunkgeräte in Fig. 12 mit insgesamt n Meß-Einheiten weist das Meßgerät 5 der Ausführungsform des erfindungsgemäßen Systems zur parallelen Empfangskalibrierung mehrerer Mobilfunkgeräte in Fig. 13 nur eine einzige Meß-Einheit auf.

Das Meßgerät 5 erzeugt gemäß Verfahrensschritt S130 des Verfahrens zur Empfangskalibrierung eines Mobilfunkgerätes in Fig. 6 ein Testsignal mit einem Sendepegelwert, der dem jeweils festgelegten Empfangsreferenzpegelwert der jeweiligen festgelegten betriebsfrequenzabhängigen Empfangskennlinie entspricht, die für alle Mobilfunkgeräte 3₁, 3₂,..., 3ₘ, 3ₙ identisch ist, und sendet es über die Schnittstellen 7₁,7₂,...,7ₘ,7ₙ und die Verbindungsleitungen 6₁, 6₂,..., 6ₘ, 6ₙ den parallel zu kalibrierenden Mobilfunkgeräten 3₁, 3₂,..., 3ₘ, 3ₙ zu.

Das vom Meßgerät 5 gesendete Testsignal wird von den Mobilfunkgeräten 3₁, 3₂,..., 3ₘ, 3ₙ empfangen. Die Mobilfunkgeräte 3₁, 3₂,...., 3ₘ, 3ₙ ermitteln parallel den tatsächlich empfangenen Pegelwert am Ausgang des jeweiligen Eingangsverstärkers und führen diesen dem festgelegten Empfangsreferenzpegelwert einer idealen Empfangskennlinie des Eingangsverstärkers im Rahmen des Kalibrierungsvorgangs in Verfahrensschritt S140 des erfindungsgemäßen Verfahrens zur Empfangskalibrierung eines Mobilfunkgerätes nach. Auf diese Weise ist es möglich, mit einem vom Meßgerät 5 erzeugten Testsignal, dessen Sendepegelwert dem jeweils festgelegten Empfangsreferenzpegelwert entspricht, mehrere Mobilfunkgeräte 3₁, 3₂,..., 3ₘ, 3ₙ hinsichtlich ihrer Empfangskennlinie zu kalibrieren.

Schließlich können die drei Ausführungsformen des erfindungsgemäßen Systems zur Sende- und Empfangskalibrierung eines Mobilfunkgeräts in den Fig. 1, 10 und 11 mit der Ausführungsform des erfindungsgemäßen Systems zur Sende- und Empfangskalibrierung mehrerer Mobilfunkgeräte in den Fig. 12 und der Ausführungsform des erfindungsgemäßen Systems zur Empfangskalibrierung mehrerer Mobilfunkgeräte in Fig. 13 zur Generierung weiterer Ausführungsformen des erfindungsgemäßen Systems zur Sende- und Empfangskalibrierung mehrerer Mobilfunkgeräte kombiniert werden.

Die Erfindung ist nicht auf die dargestellten Ausführungsformen beschränkt. Die Erfindung ist insbesondere nicht auf einen bestimmten Mobilfunkstandard beschränkt. Von der Erfindung sind auch Kalibrierungsvorgänge anderer Parameter eines Mobilfunkgerätes abgedeckt.

## Patentansprüche

1. Verfahren zur Sende- und Empfangskalibrierung mindestens eines Mobilfunkgerätes (3₁,3₂,...,3ₘ,3ₙ), indem dem/den Mobilfunkgerät (en) (3₁,3₂,...,3ₘ,3ₙ) für eine bestimmte Anzahl von Frequenzen eines Testsignals jeweils eine bestimmte Anzahl von Referenzpegelwerten des Testsignals vorgegeben wird/werden und die vom Mobilfunkgerät (3₁,3₂,...,3ₘ,3ₙ) in Abhängigkeit der Referenzpegelwerte tatsächlich generierten Pegelwerte gemessen und an die jeweils zugehörigen Referenzpegelwerte des Testsignals nachgeführt werden,
**dadurch gekennzeichnet,**
**dass** durch eine komplette Vorgabe aller Frequenzen und der zu jeder Frequenz gehörigen Referenzpegelwerte an das/die Mobilfunkgerät/e (3₁,3₂,...,3ₘ,3ₙ) von einer Einheit zur übergeordneten Ablaufsteuerung (1) oder einem Messgerät (5) vor Beginn aller Messungen alle Messungen der tatsächlich generierten Pegelwerte jeweils unmittelbar aufeinanderfolgen oder über eine bestimmte Anzahl von Zeitschlitzen, in denen jeweils kein Messvorgang stattfindet, voneinander getrennt angeordnet sind und
**dass** die Sendekalibrierung und die Empfangskalibrierung des/der Mobilfunkgeräte (s) (3₁,3₂,...,3ₘ,3ₙ) gemeinsam durchgeführt wird.

2. Verfahren zur Sende- und Empfangskalibrierung nach Anspruch 1,
**dadurch gekennzeichnet,**
**dass** die Referenzpegelwerte Sendereferenzpegelwerte und/oder Empfangsreferenzpegelwerte und die vom/von den Mobilfunkgerät/en (3₁,3₂,...,3ₘ,3ₙ) tatsächlich generierten Pegelwerte tatsächlich gesendete Pegelwerte und/oder tatsächlich empfangene Pegelwerte sind.

3. Verfahren zur Sende- und Empfangskalibrierung nach Anspruch 2,
**dadurch gekennzeichnet,**
**dass** die je vorgegebener Frequenz vorgegebenen Sendereferenzpegelwerte der idealen Sendekennlinie des/r Mobilfunkgeräts/e (3₁,3₂,...,3ₘ,3ₙ) und die je vorgegebener Frequenz vorgegebenen Empfangsreferenzpegelwerte der idealen Empfangskennlinie des/r Mobilfunkgeräts/e (3₁,3₂,...,3ₘ,3ₙ) entnommen werden.

4. Verfahren zur Sende- und Empfangskalibrierung nach Anspruch 2 oder 3,
**dadurch gekennzeichnet,**
**dass** die Nachführung jedes tatsächlich empfangenen Pegelwertes an den jeweils korrespondierenden Empfangsreferenzpegelwert jeweils unmittelbar nach der Messung jedes tatsächlich empfangenen Pegelwertes erfolgt.

5. Verfahren zur Sende- und Empfangskalibrierung nach Anspruch 2 oder 3,
**dadurch gekennzeichnet,**
**dass** die Nachführung jedes tatsächlich empfangenen Pegelwertes an den jeweils korrespondierenden Empfangsreferenzpegelwert nach der Messung aller tatsächlich empfangenen Pegelwertes erfolgt.

6. Verfahren zur Sende- und Empfangskalibrierung nach einem der Ansprüche 2 bis 5,
**dadurch gekennzeichnet,**
**dass** die Nachführung jedes tatsächlich gesendeten Pegelwertes an den jeweils korrespondierenden Sendereferenzpegelwert nach der Messung aller tatsächlich gesendeten Pegelwerte erfolgt.

7. Verfahren zur Sende- und Empfangskalibrierung nach einem der Ansprüche 4 bis 6,
**dadurch gekennzeichnet,**
**dass** die Nachführung aller tatsächlich gesendeten Pegelwerte an die jeweils zugehörigen Sendereferenzpegelwerte im Anschluß an die Nachführung aller tatsächlich empfangenen Pegelwerte an die jeweils zugehörigen Empfangsreferenzpegelwerte oder umgekehrt erfolgt.

8. Verfahren zur Sende- und Empfangskalibrierung nach einem der Ansprüche 4 bis 7,
**dadurch gekennzeichnet,**
**dass** für jede vorgegebene und zueinander gehörige Sende- und Empfangskanalfrequenz die Messung der tatsächlich gesendeten Pegelwerte simultan zur Messung und/oder Nachführung der tatsächlich empfangenen Pegelwerte an die jeweils zugehörigen Empfangsreferenzpegelwert erfolgt.

9. Verfahren zur Sende- und Empfangskalibrierung nach einem der Ansprüche 4 bis 8,
**dadurch gekennzeichnet,**
**dass** für jede vorgegebene Empfangskanalfrequenz die Nachführung der tatsächlich empfangenen Pegelwerte an die jeweils zugehörigen Empfangsreferenzpegelwerte für mehrere Mobilfunkgeräte (3₁,3₂,...,3ₘ,3ₙ) parallel erfolgt.

10. Verfahren zur Sende- und Empfangskalibrierung nach einem der Ansprüche 4 bis 9,
**dadurch gekennzeichnet,**
**dass** vor und/oder während der Nachführung der tatsächlich je vorgegebener Empfangskanalfrequenz empfangenen Pegelwerte an die jeweils zugehörigen Empfangsreferenzpegelwerte eine Frequenzkalibrierung des Frequenzoszillators des/r Mobilfunkgeräts/e (3₁,3₂,...,3ₘ,3ₙ) stattfindet.

11. Verfahren zur Sende- und Empfangskalibrierung nach einem der Ansprüche 1 bis 10,
**dadurch gekennzeichnet,**
**dass** für jede Messung eines vom/von den Mobilfunkgerät/en (3₁,3₂,...,3ₘ,3ₙ) generierten Pegelwertes jeweils ein Zeitschlitz mit einer bestimmten Zeitdauer vorgesehen ist.

12. Verfahren zur Sende- und Empfangskalibrierung nach Anspruch 11,
**dadurch gekennzeichnet,**
**dass** die Zeitschlitze der zu einer vorgegebenen Sende- oder Empfangskanalfrequenz gehörigen Messungen der Pegelwerte in einem Zeitrahmen unmittelbar aneinandergrenzen.

13. Verfahren zur Sende- und Empfangskalibrierung nach Anspruch 11,
**dadurch gekennzeichnet,**
**dass** die Zeitschlitze der zu einer vorgegebenen Sende- oder Empfangskanalfrequenz gehörigen Messungen der Pegelwerte jeweils durch eine bestimmte Anzahl von Zeitschlitzen, in denen keine Messung durchgeführt wird, voneinander zeitlich getrennt in einem Zeitrahmen angeordnet sind.

14. Verfahren zur Sende- und Empfangskalibrierung nach einem der Ansprüche 11 bis 13,
**dadurch gekennzeichnet,**
**dass** im Übergang zwischen zwei zu je einem Übertragungskanal gehörigen Sende- oder Empfangskanalfrequzenzen jeweils ein Zeitschlitz eingefügt ist, in dem keine Messung erfolgt.

15. Verfahren zur Sende- und Empfangskalibrierung nach einem der Ansprüche 1 bis 14,
**dadurch gekennzeichnet,**
**dass** die erste durchzuführende Messung eines Pegelwertes mit einer Synchronisierung des/r Mobilfunkgeräts/e (3₁,3₂,...,3ₘ,3ₙ) mit einem Meßgerät (5) und/oder einer Einheit zur übergeordneten Ablaufsteuerung (1) gestartet wird.

16. System zur Sende- und Empfangskalibrierung mindestens eines Mobilfunkgerätes (3₁,3₂,...,3ₘ,3ₙ) mit einem Meßgerät (5) und mindestens einem Mobilfunkgerät (3₁,3₂,...,3ₘ,3ₙ), das/die für eine bestimmte Anzahl von vorgegebenen Frequenzen jeweils mindestens einen vorgegebenen Referenzpegelwert eines Testsignals empfängt/empfangen, der zur Nachführung eines vom /von den Mobilfunkgerät(en) (3₁,3₂,...,3ₘ,3ₙ) tatsächlich generierten und vom Meßgerät (5) gemessenen Pegelwertes dient,
**dadurch gekennzeichnet,**
**dass** durch den Empfang sämtlicher Frequenzen und sämtlicher zu jeder Frequenz gehörigen Referenzpegelwerte von einer Einheit zur übergeordneten Ablaufsteuerung (1) oder dem Messgerät (5) vor Beginn aller Messungen alle Messungen der tatsächlich generierten Pegelwerte unmittelbar aufeinanderfolgen oder über eine bestimmte Anzahl von Zeitschlitzen, in denen jeweils kein Messvorgang stattfindet, voneinander getrennt angeordnet sind und
**dass** das System die Sendekalibrierung und die Empfangskalibrierung des/der Mobilfunkgeräte(s) (3₁,3₂,...,3ₘ,3ₙ) gemeinsam durchgeführt.

17. System zur Sende- und Empfangskalibrierung nach Anspruch 16,
**dadurch gekennzeichnet,**
**dass** die Referenzpegelwerte Sendereferenzpegelwerte und/oder Empfangsreferenzpegelwerte und die vom/von den Mobilfunkgerät/en (3₁,3₂,...,3ₘ,3ₙ) tatsächlich generierten Pegelwerte tatsächlich gesendete Pegelwerte und/oder tatsächlich empfangene Pegelwerte sind.

18. System zur Sende- und Empfangskalibrierung nach Anspruch 16 oder 17,
**dadurch gekennzeichnet,**
**dass** die Vorgabe der Frequenzen und der Referenzpegelwerte vom/von den Mobilfunkgerät/en (3₁,3₂,...,3ₘ,3ₙ) erfolgt.

19. System zur Sende- und Empfangskalibrierung nach einem der Ansprüche 16 bis 18,
**dadurch gekennzeichnet,**
**dass** die Übertragung der Referenzpegelwerte und der tatsächlich von mindestens einem Mobilfunkgerät (3₁3₂,...,3ₘ,3ₙ) generierten Pegelwerte über mindestens eine Leitungsverbindung (2,2',4,6,6',6₁,6₂,...,6ₘ,6ₙ) erfolgt.

## Claims

1. A method for the transmission and reception calibration of at least one mobile-radio device (3₁, 3₂, ..., 3ₘ, 3ₙ), in that respectively a given number of reference level values of the test signal is/are specified to the mobile-radio device/s (3₁, 3₂, ..., 3ₘ, 3ₙ) for a given number of frequencies of the test signal, and the level values actually generated by the mobile-radio device (3₁, 3₂, ..., 3ₘ, 3ₙ) dependent upon the reference level values are measured and adjusted to the respectively-associated reference level values of the test signal,
**characterised in that**,
through a complete specification of all frequencies and of the reference level values associated with each frequency to the mobile-radio device/s (3₁, 3₂, ..., 3ₘ, 3ₙ) by a unit for superordinate sequential control (1) or a measuring device (5) before the beginning of all measurements, all measurements of the actually-generated level values follow one another respectively in direct succession or are arranged separately from one another over a given number of timeslots, in each of which no measurement process takes place, and
that the transmission calibration and the reception calibration of the mobile-radio device/s (3₁, 3₂, ..., 3ₘ, 3ₙ) is implemented jointly.

2. The method for transmission and reception calibration according to claim 1,
**characterised in that**
the reference level values are transmission reference level values and/or reception reference level values, and the level values actually generated by the mobile-radio device/s (3₁, 3₂, ..., 3ₘ, 3ₙ) are actually-transmitted level values and/or actually-received level values.

3. The method for transmission and reception calibration according to claim 2,
**characterised in that**
the transmission reference level values specified for each specified frequency are taken from the ideal transmission characteristic of the mobile telephone device/s (3₁, 3₂, ..., 3ₘ, 3ₙ), and the reception reference level values specified for each specified frequency are taken from the ideal reception characteristic of the mobile-radio device/s (3₁, 3₂, ..., 3ₘ, 3ₙ).

4. The method for transmission and reception calibration according to claim 2 or 3,
**characterised in that**
the adjustment of every actually-received level value to the respectively-corresponding reception reference level value is implemented in each case directly after the measurement of every actually-received level value.

5. The method for transmission and reception calibration according to claim 2 or 3,
**characterised in that**
the adjustment of every actually-received level value to the respectively-corresponding reception reference level value is implemented after the measurement of all actually-received level values.

6. The method for transmission and reception calibration according to any one of claims 2 to 5,
**characterised in that**
the adjustment of every actually-transmitted level value to the respectively-corresponding transmission reference level value is implemented after the measurement of all actually-transmitted level values.

7. The method for transmission and reception calibration according to any one of claims 4 to 6,
**characterised in that**
the adjustment of all actually-transmitted level values to the respectively-associated transmission reference level values is implemented following the adjustment of all actually-received level values to the respectively-associated reception reference level values or vice versa.

8. The method for transmission and reception calibration according to any one of claims 4 to 7,
**characterised in that**,
for every specified and mutually-associated transmission and reception channel frequency, the measurement of the actually-transmitted level values is implemented simultaneously with the measurement and/or adjustment of the actually-received level values to the respectively-associated reception reference level value.

9. The method for transmission and reception calibration according to any one of claims 4 to 8,
**characterised in that**,
for every specified reception-channel frequency, the adjustment of the actually-received level values to the respectively-associated reception reference level values is implemented in parallel for several mobile-radio devices (3₁, 3₂, ..., 3ₘ, 3ₙ).

10. The method for transmission and reception calibration according to any one of claims 4 to 9,
**characterised in that**,
before and/or during the adjustment of the level values actually received for each specified reception-channel frequency to the respectively-associated reception reference level values, a frequency calibration of the frequency oscillator of the mobile-radio device/s (3₁, 3₂, ..., 3ₘ, 3ₙ) is implemented.

11. The method for transmission and reception calibration according to any one of claims 1 to 10,
**characterised in that**,
for every measurement of a level value generated by the mobile-radio device/s (3₁, 3₂, ..., 3ₘ, 3ₙ), a timeslot with a given time duration is provided in each case.

12. The method for transmission and reception calibration according to claim 11,
**characterised in that**
the timeslots of the measurements of the level values associated with a specified transmission or reception channel frequency are directly adjacent to one another within a time frame.

13. The method for transmission and reception calibration according to claim 11,
**characterised in that**
the timeslots of the measurements of the level values associated with a specified transmission or reception channel frequency are arranged within a time frame in each case separated from one another in time by a given number of timeslots, in which no measurement is implemented.

14. The method for transmission and reception calibration according to any one of claims 11 to 13,
**characterised in that**,
in the transition between two transmission or reception channel frequencies each associated with one transmission channel, a time slot, in which no measurement is implemented, is inserted in each case.

15. The method for transmission and reception calibration according to any one of claims 1 to 14,
**characterised in that**
the first measurement of a level value to be implemented is started with a synchronisation of the mobile-radio device/s (3₁, 3₂, ..., 3ₘ, 3ₙ) with a measuring device (5) and/or a unit for superordinate sequential control (1).

16. A system for transmission and reception calibration of at least one mobile-radio device (3₁, 3₂, ..., 3ₘ, 3ₙ) with a measuring device (5) and at least one mobile-radio device (3₁, 3₂, ..., 3ₘ, 3ₙ), which receive/s for a given number of specified frequencies respectively at least one specified reference level value of a test signal, which is used for the adjustment of a level value actually generated by the mobile-radio device/s and measured by the measuring device (5),
**characterised in that**,
through the reception of all frequencies and all reference level values associated with every frequency by a unit for superordinate sequential control (1) or by the measuring device (5) before the start of all measurements, all measurements of the actually-generated level values follow one another in direct succession or are arranged separately from one another over a given number of timeslots, in each of which no measuring process takes place, and
that the system implements the transmission calibration and the reception calibration of the mobile-radio device/s (3₁, 3₂, ..., 3ₘ, 3ₙ) jointly.

17. The system for transmission and reception calibration according to claim 16,
**characterised in that**
the reference level values are transmission reference level values and/or reception reference level values, and the level values actually generated by the mobile-radio device/s (3₁, 3₂, ..., 3ₘ, 3ₙ) are actually-transmitted level values and/or actually-received level values.

18. The system for transmission and reception calibration according to claim 16 or 17,
**characterised in that**
the specification of the frequencies and of the reference level values is implemented by the mobile-radio device/s (3₁, 3₂, ..., 3ₘ, 3ₙ).

19. The system for transmission and reception calibration according to any one of claims 16 to 18,
**characterised in that**
the transmission of the reference level values and of the level values actually generated by at least one mobile-radio device (3₁, 3₂, ..., 3ₘ, 3ₙ) is implemented via at least one connecting line (2, 2', 4, 6, 6', 6₁, 6₂,..., 6ₘ, 6ₙ).

## Revendications

1. Procédé pour calibrer l'émission et la réception d'au moins un radiotéléphone mobile (3₁, 3₂, ..., 3ₘ, 3ₙ), dans lequel un nombre défini respectif de valeurs de niveau de référence du signal test est prédéterminé pour un nombre défini de fréquences d'un signal test pour le/les radiotéléphone(s) mobile (s) (3₁, 3₂, ..., 3ₘ, 3ₙ) et les valeurs de niveau générées effectivement selon les valseurs de niveau de référence par un radiotéléphone mobile (3₁, 3₂, ..., 3ₘ, 3ₙ) sont mesurées et sont soumises aux valeurs de niveau de référence associées respectives du signal test,
**caractérisé en ce que**
grâce à une détermination complète de toutes les fréquences et des valeurs de niveau de référence associées à chaque fréquence au/aux radiotéléphone(s) mobile(s) (3₁, 3₂, ..., 3ₘ, 3ₙ) par une unité en vue de la commande séquentielle principale (1) ou par un appareil dé mesure (5) avant le début de toutes les mesures, toutes les mesures des valeurs de niveau générées effectivement se suivent respectivement immédiatement ou sont ordonnées séparées les unes des autres par l'intermédiaire d'un nombre défini d'intervalles de temps, pendant lesquels aucun procédé de mesure respectif ne se produit, et **en ce que** le calibrage d'émission et le calibrage de réception de/des radiotéléphone(s) mobile (s) (3₁, 3₂, ..., 3ₘ, 3ₙ) est effectué communément.

2. Procédé pour calibrer l'émission et la réception selon la revendication 1, **caractérisé en ce que**
les valeurs de niveau de référence sont des valeurs de niveau de référence d'émission et/ou des valeurs de niveau de référence de réception et l'es valeurs de niveau générées effectivement par le/les radiotéléphone(s) mobile(s) (3₁, 3₂, ..., 3ₘ, 3ₙ) sont des valeurs de niveau effectivement envoyées et/ou des valeurs de niveau effectivement reçues.

3. Procédé pour calibrer l'émission et la réception selon la revendication 2, **caractérisé en ce que**
les valeurs de niveau de référence d'émission prédéterminées de fréquence prédéterminée de la courbe d'émission idéale du/des radiotéléphone(s) mobile(s) (3₁, 3₂, ..., 3ₘ, 3ₙ) et les valeurs de niveau de référence de réception prédéterminées de fréquence prédéterminée de la courbe de réception idéale du/des radiotéléphone(s) mobile(s) (3₁, 3₂, ..., 3ₘ, 3ₙ) sont extraites.

4. Procédé pour calibrer l'émission et la réception, selon la revendication 2 ou 3, **caractérisé en ce que**
la mise à jour de chaque valeur de niveau effectivement reçues à la valeur de niveau de référence de réception correspondante respective est effectuée respectivement immédiatement après la mesure de chaque valeur de niveau effectivement reçue.

5. Procédé pour calibrer l'émission et la réception selon la revendication 2 ou 3, **caractérisé en ce que**
la mise à jour de chaque valeur de niveau effectivement reçue à la valeur de niveau de référence de réception correspondante respective est effectuée après la mesure de toutes les valeurs de niveau effectivement reçues.

6. Procédé pour calibrer l'émission et la réception selon l'une de revendication 2 à 5, **caractérisé en ce que**
la mise à jour de chaque valeur de niveau effectivement envoyée à la valeur de niveau de référence d'émission correspondante respective est effectuée après la mesure de toutes les valeurs de niveau effectivement envoyées.

7. Procédé pour calibrer l'émission et la réception selon l'une des revendications 4 à G, **caractérisé en ce que**
la mise à jour de toutes les valeurs de niveau effectivement envoyées aux valeurs de niveau de référence d'émission associées respectives est effectuée à la suite de la mise à jour de toutes les valeurs de niveau effectivement reçues aux valeurs de niveau de référence de réception associées respectives ou vice versa.

8. Procédé pour calibrer l'émission et la réception selon l'une des revendications 4 à 7, **caractérisé en ce que**
pour chaque fréquence de canal d'émission prédéterminée et associée et pour chaque fréquence de canal de réception prédéterminée et associée, la mesure des valeurs de niveau effectivement envoyées est effectuée simultanément à la mesure et/ou la mise à jour des valeurs de niveau effectivement reçues à la valeur de niveau de référence de réception associée respectivement.

9. Procédé pour calibrer l'émission et la réception selon l'une des revendications 4 à 8, **caractérisé en ce que**
pour chaque fréquence de canal de réception prédéterminée, la mise à jour des valeurs de niveau effectivement reçues aux valeurs de niveau de référence de réception associées respectivement est effectuée parallèlement pour plusieurs radiotéléphones mobiles (3₁, 3₂, ..., 3ₘ, 3ₙ).

10. Procédé pour calibrer l'émission et la réception selon l'une des revendications 4 à 9, **caractérisé en ce que**
avant et/ou pendant la mise à jour des valeurs de niveau reçues de fréquence de canal de réception prédéterminée aux valeurs de niveau de référence de réception associées respectivement se produit un calibrage de fréquence de l'oscillateur de fréquence du/des radiotéléphone(s) mobile(s) (3₁, 3₂, ..., 3ₘ, 3ₙ).

11. Procédé pour calibrer l'émission et la réception selon l'une des revendications 1 à 10, **caractérisé en ce que**
pour chaque mesure d'une valeur de niveau généré par le/les radiotéléphone (s) mobile(s) (3₁, 3₂, ..., 3ₘ, 3ₙ) est prévu un intervalle de temps respectif avec une durée déterminée.

12. Procédé pour calibrer l'émission et la réception selon la revendication 11, **caractérisé en ce que**
les intervalles de temps des mesures de valeurs de niveau associées à une fréquence de canal d'émission prédéterminée ou une fréquence de canal de réception prédéterminée sont immédiatement contigus dans une trame.

13. Procédé pour calibrer l'émission la réception selon la revendication 11, **caractérisé en ce que**
les intervalles de temps des mesures des valeurs de niveau associées à une fréquence de canal d'émission prédéterminée ou une fréquence de canal de réception prédéterminée sont ordonnées de façon de temporellement séparée les unes des autres dans une trame par un nombre déterminé d'intervalles de temps, pendant lesquels aucune mesure n'est effectuée.

14. Procédé pour calibrer l'émission et la réception selon l'une des revendications 11 à 13, **caractérisé en ce que**
lors du passage entre deux fréquences de canal d'émission ou de réception associées à un canal de transmission est ajouté un intervalle de temps respectif, dans lequel aucune mesure n'est effectuée.

15. Procédé pour calibrer l'émission et la réception selon l'une des revendications 1 à 14, **caractérisé en ce que**
la première mesure à effectuer d'une valeur de niveau est commencée avec la synchronisation du/des radiotéléphone(s) mobile(s) (3₁, 3₂, ..., 3ₘ, 3ₙ) avec un appareil de mesure (5) et/ou une unité pour une commande séquentielle principale (1).

16. Système pour calibrer l'émission et la réception d'au moins un radiotéléphone mobile (3₁, 3₂, ..., 3ₘ, 3ₙ) avec un appareil de mesure (5) et au moins un radiotéléphone mobile (3₁, 3₂, ..., 3ₘ, 3ₙ), qui reçoit/reçoivent pour un nombre défini de fréquences prédéterminées au moins respectivement une valeur de niveau de référence prédéterminée d'un signal test, qui est utilisée en vue de la mise à jour d'une valeur de niveau effectivement générée par un/des radiotéléphone(s) mobile(s) (3₁, 3₂, ..., 3ₘ, 3ₙ) et mesurée par un appareil de mesure (5),
**caractérisé en ce que**
grâce à la réception de toutes les fréquences et de toutes les valeurs de niveau de référence associées à chaque fréquence par une unité en vue de la commande séquentielle principale (1) ou l'appareil de mesure (5) avant le début de toutes les mesures, toutes les mesures des valeurs de niveau effectivement générées se suivent immédiatement ou sont ordonnées de façon séparée les unes des autres par un nombre défini d'intervalles de temps, pendant lesquels aucun procédé de mesure respectif n'est effectué, et
**en ce que** le système effectue communément le calibrage d'émission et le calibrage de réception du/des radiotéléphone (s) mobile(s) (3₁, 3₂, ..., 3ₘ, 3ₙ).

17. Système pour calibrer l'émission et la réception selon la revendication 16, **caractérisé en ce que**
les valeurs de niveau de référence sont des valeurs de niveau de référence d'émission et/ou des valeurs de niveau de référence de réception et les valeurs de niveau générées effectivement par le/les radiotéléphone(s) mobile(s) (3₁, 3₂, ..., 3ₘ, 3ₙ) sont des valeurs de niveau effectivement envoyées et/ou des valeurs de niveau effectivement reçues.

18. Système pour calibrer l'émission et la réception selon la revendication 16 ou 17, **caractérisé en ce que**
la détermination des fréquences et des valeurs de niveau de référence est effectuée par le/les radiotéléphone(s) mobile(s) (3₁, 3₂, ..., 3ₘ, 3ₙ).

19. Système pour calibrer l'émission et la réception selon l'une des revendications 16 à 18, **caractérisé en ce que**
la transmission des valeurs de niveau de référence et des valeurs de niveau effectivement générées par au moins un radiotéléphone mobile (3₁, 3₂, ..., 3ₘ, 3ₙ) est effectuée par l'intermédiaire d'au moins une liaison câblée (2, 2', 4, 6, 6', 6₁, 6₂, ..., 6ₘ, 6ₙ).
